# DEMANDE DE BREVET EUROPEEN

(11) **EP 2 154 359 A1**
(43) Date de publication de la demande: **17.02.2010**
(21) Numéro de dépôt: 09165517.5
(22) Date de dépôt: 15.07.2009
(51) Int. Cl.: F02N 11/10, F02N 11/08

(54) **Dispositif électrique auxiliaire, notamment pour véhicule automobile**

(30) Priorité: 13.08.2008 FR 0855559
(71) Demandeur: Valeo Equipements Electriques Moteur, 94046 Créteil Cedex (FR)
(72) Inventeur: Doffin, Hugues, 92290 Chatenay Malabry (FR); Chabour, Ferhat, 60200 Compiegne (FR); Masson, Philippe, 77166 Grisy Suisnes (FR); Tran, Vincent, 78180 Montigny Le Bretonneux (FR)
(74) Mandataire: de Lambilly Delorme, Marie Pierre

(57) **Abrégé**

L'invention concerne un dispositif électrique auxiliaire (1) destiné à être associé, d'une part, à une source d'énergie principale, notamment une batterie (2), d'un véhicule automobile, cette source d'énergie principale étant agencée pour fournir une alimentation électrique à un réseau de bord du véhicule, et d'autre part, à une machine électrique tournante (3) du véhicule, notamment un alterno-démarreur ou démarreur, ce dispositif électrique auxiliaire comportant :
- une source d'énergie auxiliaire (6), comportant notamment un ensemble de cellules de stockage d'énergie (Ci) connectées en série,
- une unité électronique de puissance (7) comportant au moins un premier interrupteur (K1) actionnable lorsque l'unité électronique de puissance est connectée électriquement à la source d'énergie principale, pour commander, lorsque la machine électrique tournante fonctionne en démarreur, un apport, à la machine électrique tournante, d'un supplément d'énergie électrique provenant de la source d'énergie auxiliaire, notamment en vue de pallier une chute de tension sur le réseau de bord du véhicule lors du démarrage.

## Description

L'invention concerne un dispositif électrique auxiliaire, notamment pour véhicule automobile.

Le brevet FR 2 843 842 décrit l'utilisation, en association avec un alterno-démarreur, d'une source de tension comportant des super-condensateurs en plus d'une batterie, permettant de fournir une tension supplémentaire, et donc une puissance supplémentaire, à l'alterno-démarreur fonctionnant en mode démarreur. Des interrupteurs sont prévus pour gérer l'apport d'énergie électrique par les super-condensateurs.

La présente invention vise notamment à améliorer un dispositif électrique auxiliaire, notamment du type précité.

L'invention a ainsi pour objet un dispositif électrique auxiliaire destiné à être associé, d'une part, à une source d'énergie principale, notamment une batterie, d'un véhicule automobile, cette source d'énergie principale étant agencée pour fournir une alimentation électrique à un réseau de bord du véhicule, et d'autre part, à au moins une machine électrique tournante du véhicule, notamment à un alterno-démarreur seul ou à un alterno-démarreur combiné avec un démarreur ou à un alternateur combiné avec un démarreur, ce dispositif électrique auxiliaire comportant :
- une source d'énergie auxiliaire, comportant notamment un ensemble de cellules de stockage d'énergie connectées en série,
- une unité électronique de puissance comportant au moins un premier interrupteur actionnable lorsque l'unité électronique de puissance est connectée électriquement à la source d'énergie principale, pour commander, lorsque la machine électrique tournante fonctionne en démarreur, un apport, à la machine électrique tournante, d'un supplément d'énergie électrique provenant de la source d'énergie auxiliaire, notamment en vue de pallier une chute de tension sur le réseau de bord du véhicule lors du démarrage,
le dispositif étant caractérisé par le fait qu'il est agencé de manière à ce que, lorsque l'unité électronique de puissance est complètement déconnectée de la source d'énergie principale, le premier interrupteur est maintenu, au moins momentanément, dans un état passant et/ou un courant de recharge de la source d'énergie principale est au moins partiellement dérivé dans une branche séparée de la source d'énergie auxiliaire et/ou un courant de recharge de la source d'énergie principale est empêché de circuler dans la source d'énergie auxiliaire, de manière à éviter une recharge de la source d'énergie auxiliaire au-delà d'un niveau de tension prédéterminé, éventuellement tout en permettant une recharge de la source d'énergie principale.

L'invention permet notamment d'éviter, lorsque l'unité électronique de puissance est déconnectée par exemple de la batterie du véhicule, que la source d'énergie auxiliaire ne se recharge, dans certains cas, de manière non voulue.

Un cas de recharge indésirable de la source d'énergie auxiliaire correspond par exemple, dans un dispositif de l'état de la technique, à la situation dans laquelle un garagiste, pour recharger la batterie principale du véhicule à l'aide d'un chargeur externe, vient à débrancher complètement une borne de cette batterie du véhicule, par exemple la borne positive, entraînant une déconnexion électrique entre la batterie du véhicule et l'unité électronique de puissance. Ceci peut avoir pour conséquence, lorsque l'interrupteur comprend un transistor à effet de champ qui est ouvert en cas de non-alimentation électrique, de faire circuler du courant provenant de la recharge de la batterie vers la source d'énergie auxiliaire, ce qui peut provoquer, si la situation perdure dans le temps, une charge excessive de la source d'énergie auxiliaire. Une telle charge excessive peut aboutir à la destruction de la source d'énergie auxiliaire.

Un problème similaire de recharge excessive peut également exister lorsque la machine électrique tournante, en mode générateur, recharge la batterie et une défaillance vient couper l'alimentation électrique des transistors à effet de champ délivrée par la batterie.

Dans un exemple de mise en oeuvre de l'invention, le dispositif auxiliaire est agencé de manière à ce que, lorsque le premier interrupteur est dans un état bloqué, la source d'énergie principale est mise en série avec la source d'énergie auxiliaire, notamment via un deuxième interrupteur commandé par l'unité électronique de puissance.

De préférence, l'unité électronique de puissance comporte, outre le premier interrupteur, un deuxième interrupteur, l'unité électronique de puissance étant agencée de manière à provoquer une séquence de fermetures et d'ouvertures des premier et deuxième interrupteurs lorsque la machine électrique tournante fonctionne en démarreur.

Avantageusement, lorsque la machine électrique tournante est un alternateur ou est un alterno-démarreur et fonctionne en alternateur, le premier interrupteur fonctionne dans un état passant et le deuxième interrupteur fonctionne dans un état bloqué.

Si on le souhaite, l'unité électronique de puissance est agencée pour être reliée par l'une de ses bornes à une masse du véhicule automobile, cette masse étant par exemple prise sur le châssis ou carrosserie du véhicule.

L'unité électronique de puissance peut être agencée pour pouvoir être connectée électriquement à une borne, par exemple une borne positive, de la source d'énergie principale, notamment la batterie, pour son alimentation électrique.

Lorsque le premier interrupteur comporte un transistor, notamment à effet de champ, agencé de manière à nécessiter une énergie électrique pour fonctionner dans un état passant, ce transistor peut être maintenu dans un état au moins partiellement passant lorsque l'unité électronique de puissance est déconnectée de la source d'énergie principale, à l'aide d'une énergie électrique prélevée sur la source d'énergie auxiliaire.

Dans un exemple de mise en oeuvre de l'invention, le premier interrupteur comporte un transistor notamment du type à effet de champ métal oxyde (MOSFET), et le dispositif est agencé de manière à ce que, lorsque l'unité électronique de puissance est déconnectée de la source d'énergie principale, l'état passant du premier interrupteur peut varier en fonction de la tension aux bornes de la source d'énergie auxiliaire.

Le dispositif peut être agencé de manière à ce que, lorsque la tension aux bornes de la source d'énergie auxiliaire est supérieure à un seuil prédéterminé tout en étant inférieure à une tension maximale de charge de cette source d'énergie auxiliaire, le transistor du premier interrupteur est totalement passant de manière à interrompre une recharge de la source d'énergie auxiliaire.

Dans un exemple de mise en oeuvre de l'invention, le dispositif comporte au moins une ligne d'alimentation du premier interrupteur par une énergie électrique prélevée sur la source d'énergie auxiliaire, et cette ligne comporte, en série, une résistance électrique et une diode.

Dans un autre exemple de mise en oeuvre de l'invention, le dispositif auxiliaire comporte un module de protection, notamment agencé de manière à être alimenté électriquement par la source d'énergie auxiliaire, ce module étant agencé pour rendre passant le transistor du premier interrupteur, notamment en appliquant à la grille du transistor, une tension suffisante, lorsque l'unité électronique de puissance est déconnectée de la source d'énergie principale et la tension aux bornes de la source d'énergie auxiliaire est supérieure audit seuil prédéterminé, de manière à interrompre une recharge de la source d'énergie auxiliaire.

Lorsque l'unité électronique de puissance est alimentée par la batterie du véhicule, le module de protection est inhibé afin d'éviter une décharge de la source d'énergie auxiliaire.

En variante, le dispositif peut comporter un relais de puissance sur une branche parallèle au premier interrupteur, le relais étant agencé pour, lorsque l'unité électronique de puissance est déconnectée de la source d'énergie principale et le premier interrupteur est dans un état bloqué, permettre une dérivation de courant dans cette branche parallèle au premier interrupteur.

Ceci peut permettre, le cas échéant, une protection de la diode de roue libre du premier interrupteur en cas de consommation sur le réseau alors que l'unité électronique de puissance n'est pas alimentée par la batterie du véhicule.

Dans un exemple de mise en oeuvre de l'invention, le dispositif est agencé de manière à ce que le relais de puissance est dans un état ouvert lorsque l'unité électronique de puissance est connecté à la source d'énergie principale, de manière à empêcher une circulation de courant dans ladite branche parallèle.

Le cas échéant, ce relais de puissance peut éventuellement être fermé dans certains modes de fonctionnement de type par exemple alternateur.

Si on le souhaite, le dispositif comporte un relais de puissance formant, avec éventuellement une diode, le premier interrupteur et agencé de manière à ce qu'en l'absence d'alimentation électrique du relais, l'interrupteur demeure dans un état fermé.

Le cas échéant, le premier interrupteur est agencé de manière à nécessiter une énergie électrique pour son maintien dans un état au moins partiellement passant, et le premier interrupteur est maintenu dans l'état passant lorsque l'unité électronique de puissance est déconnectée de la source d'énergie principale, à l'aide d'une énergie électrique prélevée sur une source d'énergie distincte des sources d'énergie principale et auxiliaire.

Par exemple, la source d'énergie distincte comporte l'un au moins d'un accumulateur, d'une pile ou d'une batterie de secours.

Dans un autre exemple de mise en oeuvre de l'invention, le dispositif comporte un troisième interrupteur comprenant un transistor à effet de champ métal oxyde (MOSFET) à appauvrissement, disposé en parallèle avec le premier interrupteur, le troisième interrupteur étant agencé pour pouvoir être passant sans application d'une tension de commande sur la grille du transistor, et, lorsque l'unité électronique de puissance est alimenté électriquement par la source d'énergie principale, le troisième interrupteur est bloqué par application d'une tension sur sa grille du transistor.

Dans un exemple de mise en oeuvre de l'invention, le dispositif auxiliaire comporte un circuit de limitation de la charge de la source d'énergie auxiliaire.

Par exemple, ce circuit de limitation de charge comporte au moins un écrêteur connecté en parallèle avec la source d'énergie auxiliaire éventuellement via un interrupteur, cet écrêteur comprenant notamment une diode telle qu'une diode Zener, ou tout autre élément permettant l'écrêtage.

En variante, ce circuit de limitation de charge comporte un interrupteur et une résistance en série, cet ensemble étant monté en parallèle avec la source d'énergie auxiliaire, l'interrupteur étant notamment contrôlable en fonction d'une tension aux bornes de la source d'énergie auxiliaire.

En variante encore, ce circuit de limitation de charge comporte un interrupteur et une diode en série, cet ensemble étant monté en parallèle avec le premier interrupteur.

Dans un autre exemple de mise en oeuvre de l'invention, un convertisseur survolteur est connecté aux bornes du premier interrupteur.

Encore dans un autre exemple de mise en oeuvre de l'invention, le dispositif auxiliaire comporte des deuxième et troisième interrupteurs comprenant chacun un transistor de type MOS, ces transistors étant notamment montés en drain commun ou en source commune, de manière à laisser passer du courant provenant de ou circulant vers la source d'énergie auxiliaire seulement dans le cas où ces transistors sont commandés simultanément.

Ainsi un courant de recharge de la batterie du véhicule est empêché de circuler dans la source d'énergie auxiliaire lorsque l'unité électronique de puissance n'est plus alimentée par la batterie.

Si on le souhaite, l'un au moins des premier et deuxième interrupteurs comporte un transistor à effet de champ, notamment du type métal oxyde (MOSFET).

En variante, l'un au moins des premier et deuxième interrupteurs est du type électromécanique.

Un interrupteur électromécanique peut être choisi pour être dans un état passant en l'absence d'alimentation électrique, contrairement par exemple à un transistor à effet de champ à enrichissement qui nécessite l'application d'une tension non nulle sur sa grille pour être passant.

L'invention a encore pour objet un dispositif électrique auxiliaire destiné à être associé, d'une part, à une source d'énergie principale, notamment une batterie, d'un véhicule automobile, cette source d'énergie principale étant agencée pour fournir une alimentation électrique à un réseau de bord du véhicule, et d'autre part, à une machine électrique tournante du véhicule, notamment un alterno-démarreur ou démarreur, ce dispositif électrique auxiliaire comportant :
- une source d'énergie auxiliaire, comportant notamment un ensemble de cellules de stockage d'énergie connectées en série,
- une unité électronique de puissance comportant au moins un premier interrupteur actionnable lorsque l'unité électronique de puissance est connectée électriquement à la source d'énergie principale, pour commander, lorsque la machine électrique tournante fonctionne en démarreur, un apport, à la machine électrique tournante, d'un supplément d'énergie électrique provenant de la source d'énergie auxiliaire, notamment en vue de pallier une chute de tension sur le réseau de bord du véhicule lors du démarrage, le premier interrupteur comprenant un transistor et une diode de roue libre en parallèle,
le dispositif étant caractérisé par le fait qu'il est agencé de manière à ce que, lorsque l'unité électronique est complètement déconnectée de la source d'énergie principale, le transistor du premier interrupteur est maintenu dans un état passant de manière à permettre la circulation à travers ce transistor d'un courant de démarrage utile pour le démarrage de la machine électrique tournante, et /ou le courant de démarrage est au moins partiellement dérivé dans une branche séparée du premier interrupteur.

L'invention permet d'éviter que, suite à une éventuelle défaillance qui provoque une coupure d'alimentation du transistor et donc un maintien dans un état bloqué de ce transistor, le courant de démarrage qui sert à démarrer la machine électrique tournante traverse la diode de roue libre, et non le transistor, ce qui peut entraîner la destruction de cette diode si le courant électrique est excessif.

Par exemple, le premier interrupteur est du type électromécanique, capable d'être dans un état passant dès que l'unité électronique de puissance est complètement déconnectée de la source d'énergie principale.

L'invention a encore pour objet un dispositif électrique auxiliaire destiné à être associé, d'une part, à une source d'énergie principale, notamment une batterie, d'un véhicule automobile, cette source d'énergie principale étant agencée pour fournir une alimentation électrique à un réseau de bord du véhicule, et d'autre part, à une machine électrique tournante du véhicule, notamment un alterno-démarreur ou démarreur, ce dispositif électrique auxiliaire comportant :
- une source d'énergie auxiliaire, comportant notamment un ensemble de cellules de stockage d'énergie connectées en série,
- une unité électronique de puissance actionnable lorsqu'elle est connectée électriquement à la source d'énergie principale, pour commander, lorsque la machine électrique tournante fonctionne en démarreur, un apport, à la machine électrique tournante, d'un supplément d'énergie électrique provenant de la source d'énergie auxiliaire, notamment en vue de pallier une chute de tension sur le réseau de bord du véhicule lors du démarrage,
le dispositif étant caractérisé par le fait qu'il est agencé de manière à ce que, lorsque l'unité électronique est complètement déconnectée de la source d'énergie principale, celle-ci est maintenue dans un état permettant une recharge de la source d'énergie principale sans permettre une recharge de la source d'énergie auxiliaire au-delà d'un niveau de charge prédéterminé, notamment sans permettre une quelconque recharge de la source d'énergie auxiliaire.

L'invention a également pour objet un dispositif électrique auxiliaire destiné à être associé, d'une part, à une source d'énergie principale, notamment une batterie, d'un véhicule automobile, cette source d'énergie principale étant agencée pour fournir une alimentation électrique à un réseau de bord du véhicule, et d'autre part, à une machine électrique tournante du véhicule, notamment un alterno-démarreur ou démarreur, ce dispositif électrique auxiliaire comportant :
- une source d'énergie auxiliaire, comportant notamment un ensemble de cellules de stockage d'énergie (Ci) connectées en série,
- une unité électronique de puissance comportant au moins un premier interrupteur actionnable lorsque l'unité électronique de puissance est connectée électriquement à la source d'énergie principale, pour commander, lorsque la machine électrique tournante fonctionne en démarreur, un apport, à la machine électrique tournante, d'un supplément d'énergie électrique provenant de la source d'énergie auxiliaire, notamment en vue de pallier une chute de tension sur le réseau de bord du véhicule lors du démarrage, le premier interrupteur étant agencé pour être passant dans les deux sens de circulation du courant lorsque l'unité électronique de puissance est déconnectée de la source d'énergie principale.

L'invention a encore pour objet un ensemble pour équiper un véhicule automobile, comportant :
- un dispositif auxiliaire tel que défini plus haut,
- une batterie connectée à ce dispositif auxiliaire.

Le dispositif auxiliaire peut, si on le souhaite, être connecté à une machine électrique tournante formée par un alterno-démarreur.

L'invention concerne également un procédé pour protéger une source d'énergie auxiliaire embarquée sur un véhicule automobile, notamment du type comportant une pluralité de cellules de stockage d'énergie comprenant chacune un super-condensateur, cette source d'énergie pouvant être connectée à une batterie du véhicule via un groupe d'interrupteurs, le procédé comportant l'étape suivante :
- lorsque le groupe d'interrupteurs est complètement déconnecté de la batterie du véhicule, agir sur ce groupe d'interrupteurs de manière à éviter qu'un courant électrique de recharge de la batterie ne provoque une surcharge de la source d'énergie auxiliaire.

Ce procédé peut, le cas échéant, comporter l'étape suivante :
- apporter de l'énergie électrique au groupe d'interrupteurs, cette énergie étant autre que celle issue de la batterie, cette énergie étant notamment prélevée sur la source d'énergie auxiliaire ou sur une source d'énergie distincte de la batterie et de la source d'énergie auxiliaire.

L'invention propose encore un procédé pour protéger, dans un dispositif électrique auxiliaire pour véhicule automobile, une diode d'un interrupteur, lequel comprend un transistor en parallèle avec la diode, l'interrupteur étant relié électriquement à une batterie du véhicule, le procédé comportant l'étape suivante :
- rendre passant le transistor lorsque l'unité électronique de puissance est déconnectée de la batterie du véhicule.

L'invention pourra être mieux comprise à la lecture de la description détaillée qui va suivre, d'exemples de mise en oeuvre non limitatifs de l'invention, et à l'examen du dessin annexé, sur lequel :
- les figures 1 et 2 représentent, schématiquement et partiellement, un dispositif électrique auxiliaire, respectivement suivant deux modes de fonctionnement,
- la figure 3 illustre un dispositif électrique auxiliaire selon un exemple de mise en oeuvre de l'invention, et
- les figures 4 à 19 représentent, schématiquement et partiellement, d'autres exemples de dispositif électrique auxiliaire conforme à l'invention.

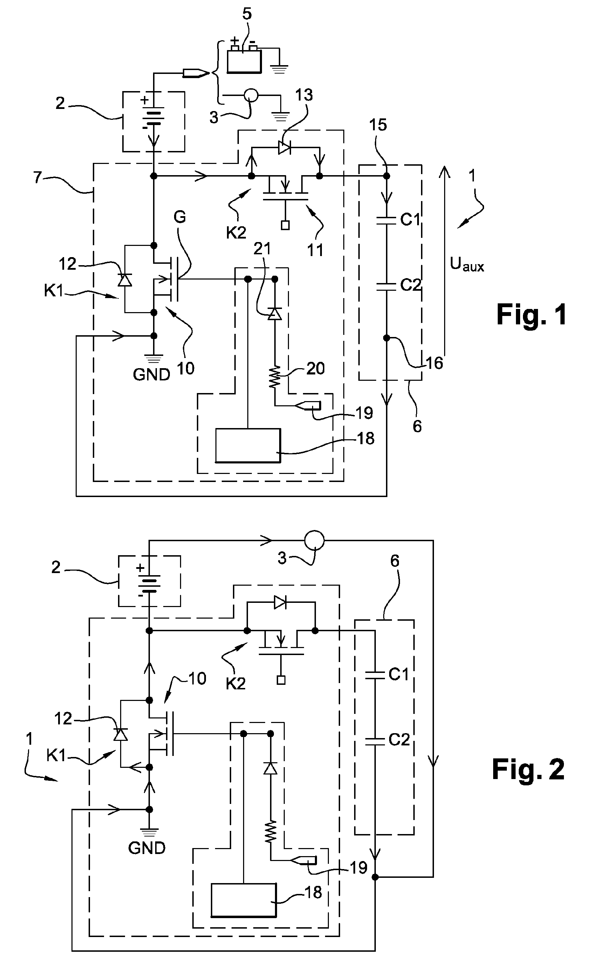

On a représenté sur la figure 1 un dispositif électrique auxiliaire 1 pour équiper un véhicule automobile, associé, d'une part, à une source d'énergie principale, formée par une batterie 2 du véhicule automobile, cette source d'énergie principale 2 étant agencée pour fournir une alimentation électrique à un réseau de bord, non représenté, du véhicule, et d'autre part, à une machine électrique tournante du véhicule, formée par un alterno-démarreur 3 dans l'exemple décrit.

L'alterno-démarreur 3 est agencé pour fonctionner, sélectivement, en mode alternateur pour générer un courant électrique ou en mode démarreur pour démarrer le moteur à combustion interne du véhicule.

Le dispositif auxiliaire 1 peut, en variante, être associé à un alterno-démarreur combiné à un démarreur, ou un alternateur combiné avec un démarreur.

La batterie 2, notamment du type 12 Volts, est par exemple une batterie Li-On (Lithium-Ion), Ni-Mh (Nickel- Métal hydrure) ou au Plomb.

Dans l'exemple décrit, la borne positive de la batterie 2 est agencée pour être connectée, en fonctionnement normal, à l'alterno-démarreur 3 ou, en cas de recharge de la batterie 2, à un chargeur externe 5.

Cette connexion sur la borne positive de la batterie 2 est réalisée par exemple à l'aide d'une cosse électrique.

Le dispositif électrique auxiliaire 1 comporte, dans l'exemple décrit :
- une source d'énergie auxiliaire 6 entre des bornes 15 et 16, comportant un ensemble de cellules de stockage d'énergie C1 et C2 connectées en série,
- une unité électronique de puissance 7 actionnable lorsque connectée électriquement à la batterie 2 pour commander, lorsque l'alterno-démarreur 3 fonctionne en démarreur, un apport, à l'alterno-démarreur, d'un supplément d'énergie électrique provenant de la source d'énergie auxiliaire 6, en vue de pallier une chute de tension sur le réseau de bord du véhicule lors du démarrage et augmenter le couple produit par l'alterno-démarreur.

L'unité électronique de puissance 7 comporte deux interrupteurs K1 et K2 comprenant chacun un transistor à effet de champ 10 (MOSFET), respectivement 11, et une diode de roue libre 12, respectivement 13, en parallèle avec le transistor 10, respectivement 11.

L'interrupteur 10 est, dans l'exemple décrit, relié d'une part à la borne négative de la batterie 2 et d'autre part, à la borne 16 de la source d'énergie auxiliaire 6, laquelle borne 16 correspond électriquement à une masse GND prise par exemple sur le châssis du véhicule.

La diode 12 est passante pour un courant circulant de la borne 16 vers la borne négative de la batterie 2.

L'interrupteur 11 est relié à la borne négative de la batterie 2 et à l'autre borne 15 de la source d'énergie auxiliaire 6.

La diode 13 est passante pour un courant circulant de la borne négative de la batterie 2 vers la borne 15.

Lorsque la borne positive de la batterie 2 est reliée soit à l'alterno-démarreur en mode de fonctionnement générateur normal, soit au chargeur externe 5 pour la recharge de la batterie, l'interrupteur K1 devrait être passant pour un courant électrique provenant de la batterie 2, ce qui permet de recharger convenablement la batterie 2, sans recharger la source d'énergie auxiliaire 6.

Or il peut arriver, tandis que l'alterno-démarreur est en mode de fonctionnement en générateur de courant, que l'alimentation électrique de l'unité électronique de puissance 7 par la batterie 2 soit coupée suite à une défaillance.

Il est possible, dans un autre cas, lorsque la cosse sur la borne positive de la batterie est retirée par un garagiste pour pouvoir connecter sur cette borne positive le chargeur externe 5, que le garagiste coupe, sans le savoir, l'alimentation électrique de l'unité électronique de puissance 7.

Quelque soit la raison pour laquelle l'unité électronique de puissance 7 est déconnectée de la batterie 2, il résulte des situations ci-dessus que le transistor 10, habituellement actionnable en étant relié par sa grille à un organe de commande 18, encore appelé *Driver* en anglais, voire à une alimentation électrique de sécurité 19 provenant de la batterie 2 (une résistance 20 et une diode 21 en série étant placées entre cette alimentation 19 et la grille G du transistor 10), peut basculer dans un état bloqué, obligeant le courant de la recharge de la batterie 2 à circuler à travers la diode 13 de l'interrupteur K2 puis à travers les cellules C1 et C2.

Autrement dit lorsque le premier interrupteur K1 est dans l'état bloqué, la batterie 2 est mise en série avec la source d'énergie auxiliaire 6.

Ainsi il existe un risque de surcharge électrique des cellules C1 et C2, lorsque le courant de recharge est appliqué sur une période prolongée, pouvant endommager voire détruire celles-ci.

Cette situation non souhaitée est représentée sur la figure 1.

Lorsqu'une défaillance électrique survient sur l'unité électronique de puissance 1 et l'alimentation électrique est coupée entre la batterie 2 et l'unité électronique de puissance 7, le transistor 10 est alors à l'état bloqué et tout le courant de démarrage ou un courant alimentant d'autres consommateurs du véhicule, passe dans la diode 12 de l'interrupteur K1.

Ceci peut provoquer la destruction de la diode 12.

Cette situation non souhaitée est illustrée sur la figure 2.

Il convient de noter que, lorsque l'alterno-démarreur 3 fonctionne en alternateur, le premier interrupteur K1 fonctionne dans un état passant et le deuxième interrupteur K2 fonctionne dans un état bloqué.

Afin de réduire, voire supprimer, les risques précités, le dispositif auxiliaire 1 est agencé de manière à ce que, lorsque l'unité électronique 7 est complètement déconnectée de la batterie 2, le premier interrupteur K1 est maintenu dans un état passant de manière à permettre une recharge de la batterie 2 sans permettre une recharge de la source d'énergie auxiliaire 6 au-delà d'un niveau de charge prédéterminé.

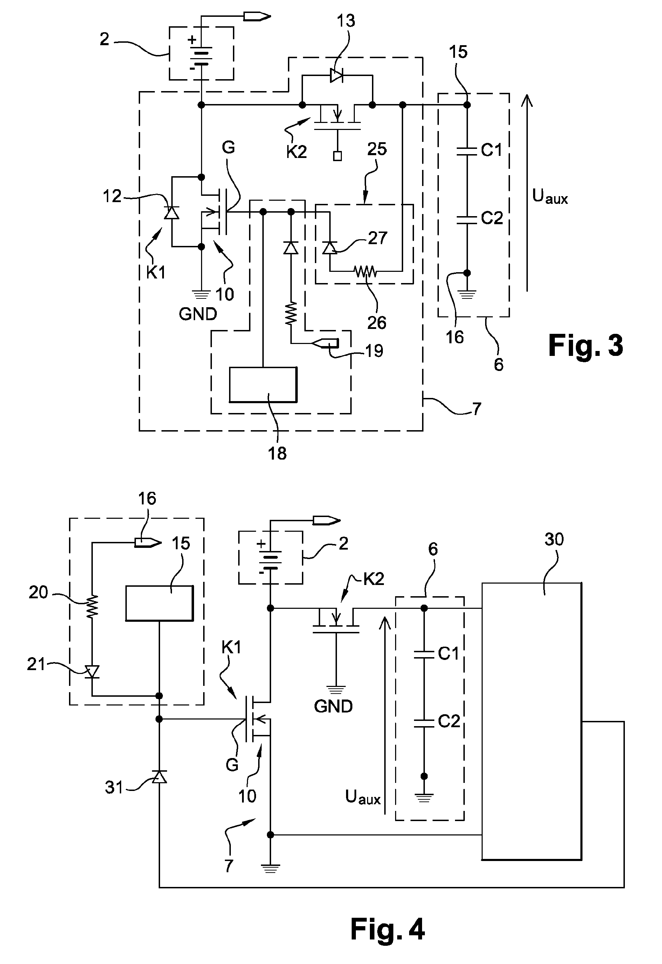

A cet effet, il est possible, comme illustré sur la figure 3, de prévoir dans l'unité électronique de puissance 7, une ligne d'alimentation 25 reliée à la borne 15 de la source d'énergie auxiliaire 6 et à la grille G du transistor 10 de l'interrupteur K1, cette ligne 25 permettant de maintenir le transistor 10 dans un état au moins partiellement passant à l'aide d'une énergie électrique prélevée sur la source d'énergie auxiliaire 6 lorsque l'unité électronique de puissance 7 est totalement déconnectée de la batterie 2 (le *Driver* 18 et l'alimentation de sécurité 19 étant inopérants).

Dans l'exemple illustré sur la figure 3, la ligne 25 comporte une résistance 26 en série avec une diode 27 qui est passante pour un courant circulant de la borne 15 vers la grille G du transistor 10.

La diode 27 permet d'éviter une décharge et recharge des cellules C1 et C2 lorsque l'alimentation est présente via la résistance 26.

Cette ligne 25 permet de garder l'interrupteur K1 commandé par la source d'énergie auxiliaire 6 lorsque l'unité électronique de puissance 7 n'est pas alimentée.

En l'absence d'activité des éléments 18 et 19, la ligne 25 permet d'injecter la tension de la source d'énergie auxiliaire 6 sur la grille G du transistor 10 de l'interrupteur K1.

Si cette tension est suffisante, celle-ci met l'interrupteur K1 en conduction.

Cependant, si cette tension est insuffisante, étant inférieure à un seuil prédéterminé du fait d'un niveau de charge relativement faible de la source d'énergie auxiliaire 6, le transistor 10 peut, le cas échéant, passer en mode linéaire pour dériver une partie du courant de charge et donc provoquer une dissipation d'énergie que l'interrupteur K1 doit supporter.

Lorsque la tension Uaux aux bornes de la source d'énergie auxiliaire 6 est suffisante, étant supérieure au seuil précité mais inférieure à la tension maximale de charge de la source d'énergie auxiliaire 6, l'interrupteur K1 est totalement conducteur de manière à empêcher toute surtension aux bornes 15 et 16 de la source d'énergie auxiliaire 6.

En variante, comme illustré sur la figure 4, le dispositif auxiliaire 1 comporte un module électronique de protection 30 agencé de manière à être alimenté électriquement par la source d'énergie auxiliaire 6.

Ce module 30 est agencé :
- pour maintenir le transistor 10 du premier interrupteur K1 à l'état bloqué lorsque l'unité électronique de puissance 7 est déconnectée de la batterie 2 et la tension Uaux aux bornes 15 et 16 de la source d'énergie auxiliaire 6 est inférieure à un seuil prédéterminé, et
- pour rendre passant le transistor 10 du premier interrupteur K1, en appliquant à la grille G du transistor 10, une tension équivalente à la tension aux bornes 15 et 16 de la source d'énergie auxiliaire 6, lorsque l'unité électronique de puissance 7 est déconnectée de la batterie 7 et la tension aux bornes 15 et 16 de la source d'énergie auxiliaire 6 est supérieure au seuil prédéterminé de manière à interrompre une recharge de la source d'énergie auxiliaire 6.

Le module 30 est relié à la grille G du transistor 10 via une diode 31 qui est passante pour un courant circulant du module 30 vers la grille G du transistor 10.

Par exemple le module 30 comporte un transistor MOS déclenchable sur un seuil de la tension Uaux et peut être inhibé une fois l'alimentation sur l'unité électronique de puissance présente.

Lorsque la tension Uaux aux bornes 15 et 16 de la source d'énergie auxiliaire 6 est faible, le transistor MOSFET 10 de l'interrupteur K1 est à l'état bloqué.

Lorsque la tension Uaux dépasse un seuil prédéterminé, le module 30 est activé et injecte la tension Uaux à la grille du transistor 10 pour le saturer.

Ceci a pour conséquence d'interrompre immédiatement la charge des cellules C1 et C2.

Cette configuration permet d'éviter la dissipation d'énergie et donc un échauffement dans l'interrupteur K1.

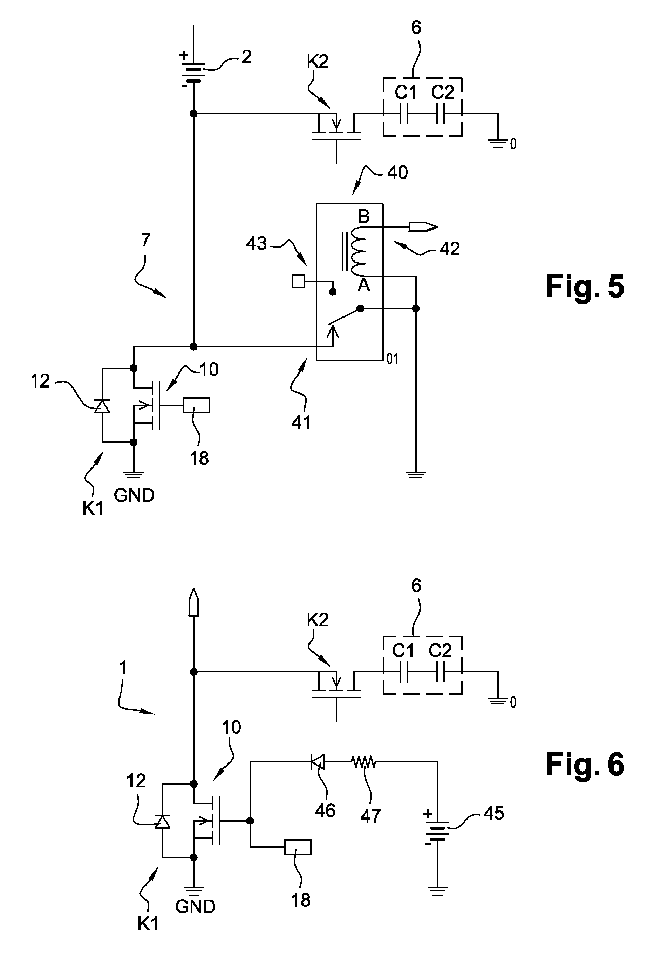

Dans un autre exemple de mise en oeuvre illustré sur la figure 5, il est prévu un relais de puissance électromécanique 40 sur une branche 41 parallèle au premier interrupteur K1, le relais 40 étant agencé pour, lorsque l'unité électronique de puissance 7 est déconnectée de la batterie 2 et le premier interrupteur K1 est dans un état bloqué, permettre une dérivation de courant dans cette branche 41 parallèle au premier interrupteur K1.

Le relais 40 comprend une bobine 42 agencée pour contrôler un interrupteur électromécanique 43, lequel est fermé en l'absence de courant dans la bobine 42.

L'alimentation électrique de la bobine 42 est commandée par l'unité électronique de puissance 7 ou, en variante, de manière externe à l'unité électronique de puissance 7.

En l'absence d'alimentation de l'unité électronique de puissance 7, le contact électrique est établi entre la masse GND et la cathode de la batterie 2 grâce à l'interrupteur électromécanique 43.

Ceci permet d'éviter un démarrage sur la diode 12 de l'interrupteur K1 lorsque l'unité électronique de puissance 7 n'est pas alimentée.

Lorsque l'alimentation de la batterie 2 est présente sur l'unité électronique de puissance 7, le relais 40 est commandé pour ouvrir l'interrupteur électromécanique 43 pour rendre disponibles les fonctionnalités du dispositif auxiliaire 1, pour permettre par exemple une séquence d'actionnements des interrupteurs K1 et K2.

Dans un autre exemple de mise en oeuvre illustré sur la figure 6, le dispositif auxiliaire 1 est associé, via une diode 46 et une résistance de protection 47, à une source d'énergie 45 distincte de la batterie 2 et des cellules C1 et C2, agencée pour maintenir le transistor 12 à l'état passant, en l'absence d'alimentation de l'unité électronique de puissance 7.

Cette source 45 peut être un accumulateur, une pile ou une batterie de secours, par exemple.

Cette source 45 peut externe au dispositif auxiliaire 1 ou y être incorporée.

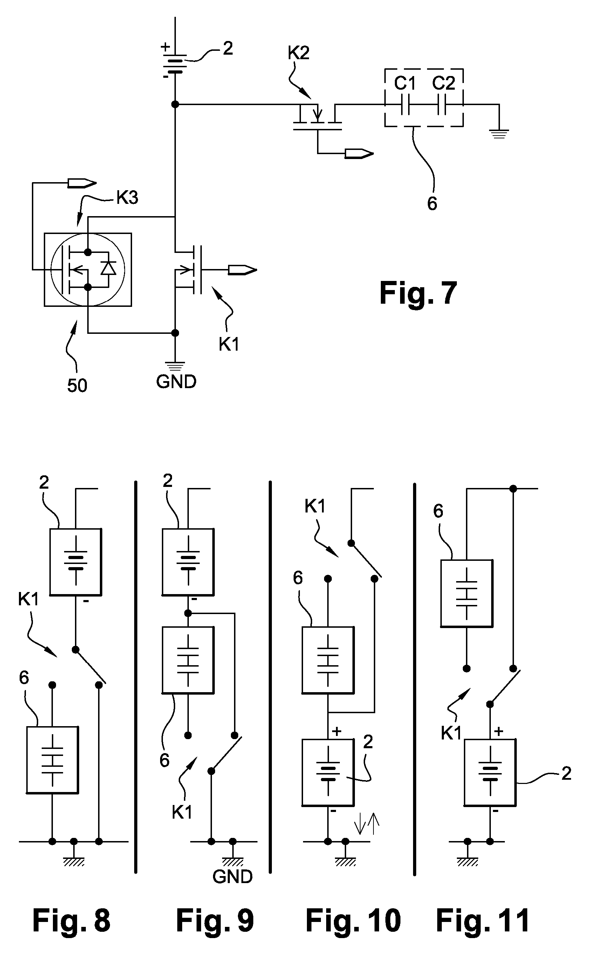

Dans un autre exemple de mise en oeuvre illustré sur la figure 7, le dispositif auxiliaire 1 comporte un troisième interrupteur K3 comprenant un transistor 50 à effet de champ métal oxyde (MOSFET) à appauvrissement, disposé en parallèle avec le premier interrupteur K1.

Le troisième interrupteur K3 est agencé pour pouvoir être passant sans application d'une tension de commande sur la grille du transistor 50 pour dériver le courant de recharge hors du premier interrupteur K1, et lorsque l'unité électronique de puissance 7 est alimenté électriquement par la batterie 2, le troisième interrupteur K3 est bloqué par application d'une tension sur la grille de ce transistor 50.

Dans les exemples décrits ci-dessus, la recharge des cellules C1 et C2 peut être réalisée, le cas échéant, par un système de recharge, non représenté, différent de l'unité électronique de puissance 7.

On ne sort pas du cadre de la présente invention lorsque l'interrupteur K1 est dépourvu de transistor MOS, lequel est remplacé par un interrupteur K1 de type électromécanique.

On a représenté sur la figure 8 une telle configuration.

L'interrupteur K1 est agencé pour basculer, selon les cas, dans l'état fermé ou ouvert pour mettre la source d'énergie auxiliaire 6 en série avec la batterie 2, ou la déconnecter de la batterie 2.

Dans l'exemple de la figure 8, l'interrupteur K1 est placé entre la batterie 2 et la source auxiliaire 6.

En variante, comme illustré sur la figure 9, l'interrupteur K1 est placé entre la source auxiliaire 6 et la masse GND.

Bien entendu, l'invention n'est pas limitée aux exemples de mise en oeuvre qui viennent d'être décrits.

Dans les exemples de mise en oeuvre des figures 10 et 11, la source auxiliaire 6 est connectée, non pas à une borne négative de la batterie 2 comme illustré plus haut, mais à une borne positive de cette batterie 2.

Dans l'exemple de la figure 10, l'interrupteur K1 est placé sur une borne de la source auxiliaire 6 opposée au côté de la batterie 2.

En variante, comme illustré sur la figure 11, l'interrupteur K1 est placé entre une borne de la source auxiliaire 6 et la batterie 2.

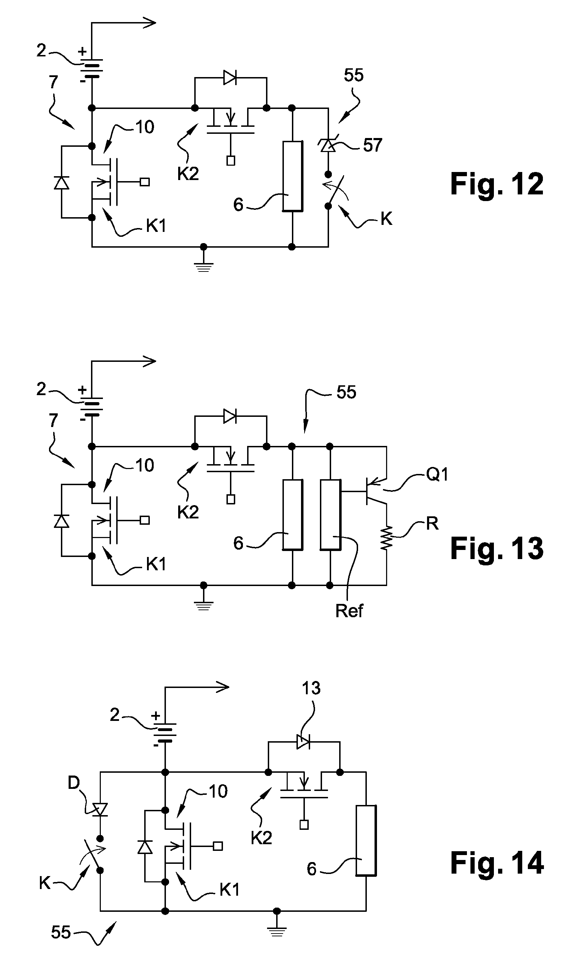

On a représenté sur la figure 12 un dispositif auxiliaire comportant un circuit 55 de limitation de la charge de la source d'énergie auxiliaire 6.

Ce circuit 55 de limitation de charge comporte un écrêteur 57 connecté en parallèle avec la source d'énergie auxiliaire 6 via un interrupteur K, cet écrêteur 57 comprenant une diode Zener.

Initialement l'interrupteur commandé K est ouvert pour empêcher la décharge de la source d'énergie auxiliaire 6 dans l'écrêteur 57.

L'interrupteur K est commandé en fermeture à la disparition de la tension d'alimentation de l'unité électronique de puissance 7, et l'écrêteur 57 supporte alors le courant de charge qui est ainsi dérivé.

Dans l'exemple décrit, le transistor 10 de l'interrupteur K1 reste bloqué lorsque la tension d'alimentation de l'unité électronique de puissance 7 disparaît.

En variante, comme illustré sur la figure 13, ce circuit 55 de limitation de charge comporte un interrupteur Q1 et une résistance R en série, cet ensemble étant monté en parallèle avec la source d'énergie auxiliaire 6, l'interrupteur Q1 étant contrôlable en fonction d'une tension aux bornes de la source d'énergie auxiliaire 6.

Dans cet exemple, dès que la source d'énergie auxiliaire 6 est en surtension, l'interrupteur Q1 permet de décharger l'excès d'énergie dans la résistance R, la commande étant fonction d'un seuil Ref prédéterminé de la tension aux bornes de la source d'énergie auxiliaire 6.

Ainsi la tension aux bornes de la source auxiliaire 6 reste inférieure à une valeur maximale admissible.

En variante encore, comme illustré sur la figure 14, ce circuit 55 de limitation de charge comporte un interrupteur K et une diode D en série, cet ensemble étant monté en parallèle avec le premier interrupteur K1.

Dans cet exemple, lorsque les interrupteurs K1 et K2 sont tous les deux ouverts, le courant de charge de la batterie 2 passe dans la diode D et l'interrupteur K fermé, au lieu de la diode 13 de l'interrupteur K2.

Ceci permet d'éviter la recharge de la source auxiliaire 6.

L'interrupteur K et la diode D sont choisis pour supporter le courant de charge de la batterie 2.

L'interrupteur K est fermé au repos par exemple par un relais et ne peut être commandé en ouverture que si l'alimentation de l'unité électronique de puissance 7 est présente.

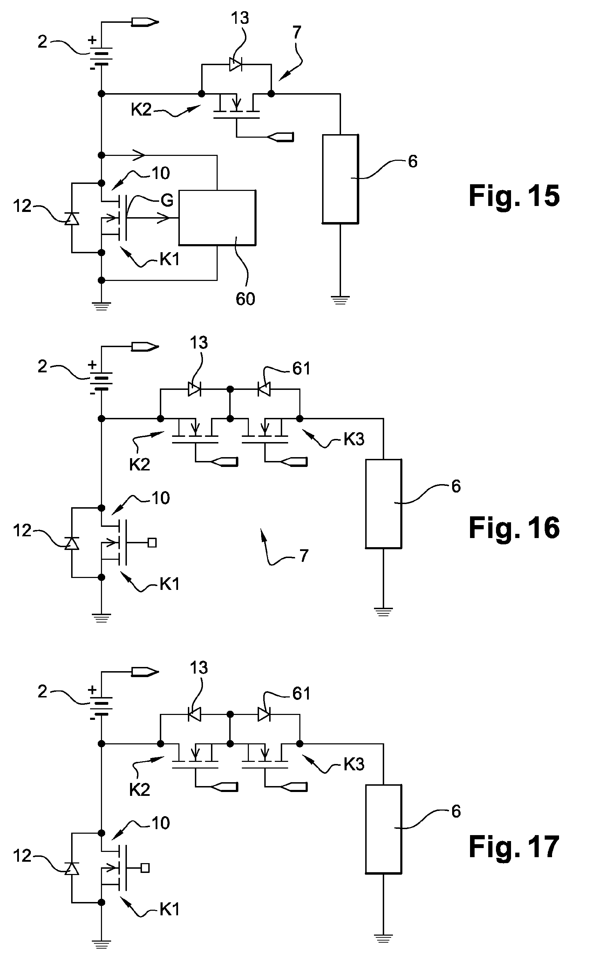

On a représenté sur la figure 15 un autre exemple de mise en oeuvre de l'invention, dans lequel un convertisseur survolteur 60 est connecté aux bornes de l'interrupteur K1.

En l'absence d'alimentation de l'unité électronique de puissance 7 et au moment du démarrage, la chute de tension aux bornes de la diode 12 de l'interrupteur K1 permet d'alimenter ce convertisseur 60.

Ce dernier permet de générer une tension suffisamment élevée pour commander le transistor 10 de l'interrupteur K1 à la fermeture. Ainsi la diode 12 de l'interrupteur K1 est protégée.

Dans le cas d'une recharge de la batterie 2, par exemple en branchant un chargeur de batterie entre l'anode de la batterie et le châssis du véhicule, la conduction de la diode 13 de l'interrupteur K2 présente la tension de l'unité électronique de puissance 7 aux bornes de l'interrupteur K1, ce qui a pour effet d'alimenter le convertisseur survolteur 60 entraînant ainsi la fermeture de l'interrupteur K1. La source d'énergie auxiliaire 6 est alors protégée contre une éventuelle surtension.

Dans un régime de fonctionnement normal dans lequel l'alimentation de l'unité électronique de puissance 7 est présente, cette alimentation permet d'inhiber le fonctionnement du convertisseur 60.

On a représenté sur les figures 16 et 17 deux autres exemples de mise en oeuvre de l'invention, dans lesquels des deuxième interrupteur K2 et troisième interrupteur K3 sont prévus.

Ces deuxième et troisième interrupteurs K2 et K3 comprennent chacun un transistor de type MOS respectivement 13 et 61, ces transistors 13 et 61 étant montés en drain commun (voir figure 16) ou en source commune (voir figure 17), de manière à laisser passer du courant provenant de ou circulant vers la source d'énergie auxiliaire 6 seulement dans le cas où ces transistors 13 et 61 sont commandés simultanément.

En l'absence d'alimentation sur l'unité électronique de puissance 7, la source d'énergie auxiliaire 6 est ainsi protégée.

On peut constater que, en l'absence d'alimentation sur l'unité électronique de puissance 7, un courant provenant de la borne négative de la batterie 2 est empêché de circuler dans les deux branches contenant les interrupteurs K1, K2 et K3, ce qui peut éventuellement empêcher une recharge de la batterie 2.

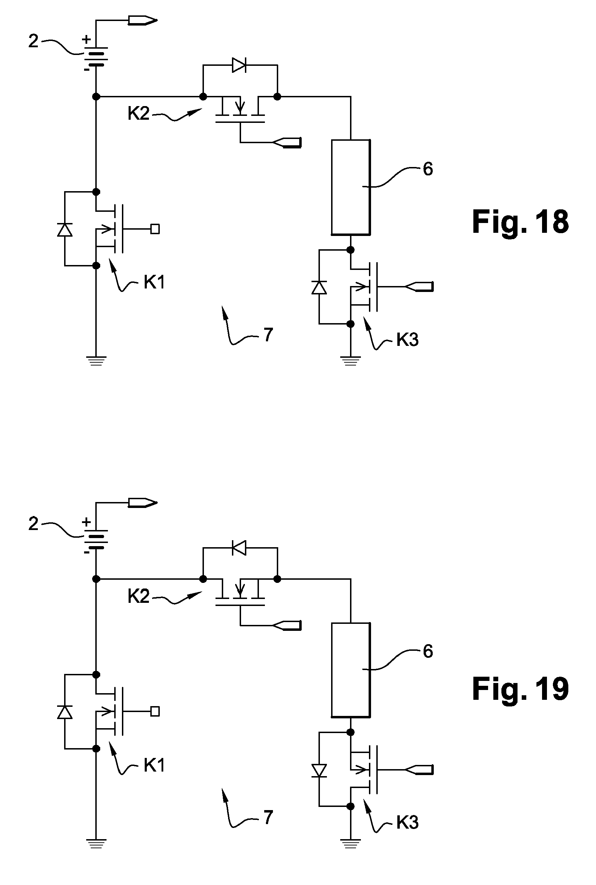

On a représenté sur les figures 18 et 19 deux autres exemples de mise en oeuvre de l'invention, sensiblement analogues à ceux des figures 16 et 17, avec les interrupteurs K2 et K3 disposés de part et d'autre de la source d'énergie auxiliaire 6.

## Revendications

1. Dispositif électrique auxiliaire (1) destiné à être associé, d'une part, à une source d'énergie principale, notamment une batterie (2), d'un véhicule automobile, cette source d'énergie principale étant agencée pour fournir une alimentation électrique à un réseau de bord du véhicule, et d'autre part, à au moins une machine électrique tournante (3) du véhicule, notamment à un alterno-démarreur seul ou à un alterno-démarreur combiné avec un démarreur ou à un alternateur combiné avec un démarreur, ce dispositif électrique auxiliaire comportant :
- une source d'énergie auxiliaire (6), comportant notamment un ensemble de cellules de stockage d'énergie (Ci) connectées en série,
- une unité électronique de puissance (7) comportant au moins un premier interrupteur (K1) actionnable lorsque l'unité électronique de puissance est connectée électriquement à la source d'énergie principale, pour commander, lorsque la machine électrique tournante fonctionne en démarreur, un apport, à la machine électrique tournante, d'un supplément d'énergie électrique provenant de la source d'énergie auxiliaire, notamment en vue de pallier une chute de tension sur le réseau de bord du véhicule lors du démarrage,
le dispositif étant **caractérisé par le fait qu'**il est agencé de manière à ce que, lorsque l'unité électronique de puissance est complètement déconnectée de la source d'énergie principale, notamment lorsqu'une alimentation électrique de l'unité électronique de puissance est coupée suite à une défaillance, le premier interrupteur est maintenu, au moins momentanément, dans un état passant et/ou un courant de recharge de la source d'énergie principale est au moins partiellement dérivé dans une branche séparée de la source d'énergie auxiliaire et/ou un courant de recharge de la source d'énergie principale est empêché de circuler dans la source d'énergie auxiliaire, de manière à éviter une recharge de la source d'énergie auxiliaire au-delà d'un niveau de tension prédéterminé, éventuellement tout en permettant une recharge de la source d'énergie principale.

2. Dispositif selon la revendication précédente, **caractérisé par le fait que** l'unité électronique de puissance (7) est agencée pour pouvoir être connectée électriquement à une borne, par exemple une borne positive, de la source d'énergie principale (2), notamment la batterie, pour son alimentation électrique.

3. Dispositif selon l'une quelconque des revendications précédentes, le premier interrupteur (K1) comportant un transistor (10) agencé de manière à nécessiter une énergie électrique pour fonctionner dans un état passant, **caractérisé par le fait que** le transistor (10) est maintenu dans un état au moins partiellement passant lorsque l'unité électronique de puissance est déconnectée de la source d'énergie principale, à l'aide d'une énergie électrique prélevée sur la source d'énergie auxiliaire.

4. Dispositif selon la revendication précédente, le premier interrupteur comportant un transistor (10) notamment du type à effet de champ métal oxyde (MOSFET), **caractérisé par le fait que** le dispositif est agencé de manière à ce que, lorsque l'unité électronique de puissance est déconnectée de la source d'énergie principale, l'état passant du premier interrupteur (K1) peut varier en fonction de la tension aux bornes de la source d'énergie auxiliaire.

5. Dispositif selon la revendication précédente, **caractérisé par le fait qu'**il est agencé de manière à ce que, lorsque la tension aux bornes de la source d'énergie auxiliaire est supérieure à un seuil prédéterminé tout en étant inférieure à une tension maximale de charge de cette source d'énergie auxiliaire, le transistor du premier interrupteur (K1) est totalement passant de manière à interrompre une recharge de la source d'énergie auxiliaire.

6. Dispositif selon l'une des deux revendications précédentes, **caractérisé par le fait qu'**il comporte au moins une ligne d'alimentation (25) du premier interrupteur par une énergie électrique prélevée sur la source d'énergie auxiliaire, et **par le fait que** cette ligne comporte notamment, en série, une résistance électrique (26) et une diode (27).

7. Dispositif selon la revendication 3, **caractérisé par le fait qu'**il comporte un module de protection (30), notamment agencé de manière à être alimenté électriquement par la source d'énergie auxiliaire, ce module étant agencé pour rendre passant le transistor du premier interrupteur, notamment en appliquant à la grille du transistor, une tension suffisante lorsque l'unité électronique de puissance est déconnectée de la source d'énergie principale et la tension aux bornes de la source d'énergie auxiliaire est supérieure audit seuil prédéterminé de manière à interrompre une recharge de la source d'énergie auxiliaire.

8. Dispositif selon l'une quelconque des revendications 1 à 6, **caractérisé par le fait qu'**il comporte un relais de puissance (40) sur une branche parallèle au premier interrupteur, le relais étant agencé pour, lorsque l'unité électronique de puissance (7) est déconnectée de la source d'énergie principale et le premier interrupteur est dans un état bloqué, permettre une dérivation de courant dans cette branche parallèle au premier interrupteur.

9. Dispositif selon l'une quelconque des revendications 1 à 6, **caractérisé par le fait qu'**il comporte un relais de puissance formant le premier interrupteur et agencé de manière à ce qu'en l'absence d'alimentation électrique du relais, l'interrupteur demeure dans un état fermé.

10. Dispositif selon l'une quelconque des revendications 1 à 6, le premier interrupteur (K1) étant agencé de manière à nécessiter une énergie électrique pour son maintien dans un état au moins partiellement passant, **caractérisé par le fait que** le premier interrupteur est maintenu dans l'état passant lorsque l'unité électronique de puissance est déconnectée de la source d'énergie principale, à l'aide d'une énergie électrique prélevée sur une source d'énergie (45) distincte des sources d'énergie principale et auxiliaire.

11. Dispositif selon la revendication 1, **caractérisé par le fait qu'**il comporte un troisième interrupteur comprenant un transistor à effet de champ métal oxyde (MOSFET) à appauvrissement, disposé en parallèle avec le premier interrupteur, le troisième interrupteur étant agencé pour pouvoir être passant sans application d'une tension de commande sur la grille (G) du transistor, et **par le fait que**, lorsque l'unité électronique de puissance est alimenté électriquement par la source d'énergie principale, le troisième interrupteur (K3) est bloqué par application d'une tension sur la grille du transistor.

12. Dispositif selon la revendication 1, **caractérisé par le fait qu'**il comporte un circuit (55) de limitation de la charge de la source d'énergie auxiliaire (6).

13. Dispositif selon l'une quelconque des revendications 1 à 6, **caractérisé par le fait qu'**un convertisseur survolteur (60) est connecté aux bornes du premier interrupteur (K1).

14. Dispositif selon l'une quelconque des revendications 1 à 6, **caractérisé par le fait que** le dispositif auxiliaire comporte des deuxième (K2) et troisième (K3) interrupteurs comprenant chacun un transistor de type MOS, ces transistors étant notamment montés en drain commun ou en source commune, de manière à laisser passer du courant provenant de ou circulant vers la source d'énergie auxiliaire (6) seulement dans le cas où ces transistors sont commandés simultanément.

15. Dispositif selon la revendication 1, **caractérisé par le fait que** le premier interrupteur comprenant un transistor et une diode de roue libre en parallèle, et **par le fait que** le dispositif est agencé de manière à ce que, lorsque l'unité électronique est complètement déconnectée de la source d'énergie principale, notamment lorsqu'une alimentation électrique de l'unité électronique de puissance est coupée suite à une défaillance, le transistor du premier interrupteur est maintenu dans un état passant de manière à permettre la circulation à travers ce transistor d'un courant de démarrage utile pour le démarrage de la machine électrique tournante, et /ou le courant de démarrage est au moins partiellement dérivé dans une branche séparée du premier interrupteur.

16. Ensemble pour équiper un véhicule automobile, comportant :
- un dispositif auxiliaire (1) selon l'une quelconque des revendications précédentes,
- une batterie connectée à ce dispositif auxiliaire.
